# EUROPEAN PATENT APPLICATION

(11) **EP 4 556 103 A1**
(43) Date of publication of application: **21.05.2025**
(21) Application number: 23839463.9
(22) Date of filing: 28.06.2023
(51) Int. Cl.: B01D 61/12, C02F 1/44

(54) **CONTROL METHOD FOR RO SYSTEM, AND CONTROL PROGRAM FOR WATER TREATMENT SYSTEM**

(30) Priority: 11.07.2022 JP 2022111256
(71) Applicant: Kurita Water Industries Ltd., Tokyo 164-0001 (JP); FRACTA LEAP K.K., Tokyo 150-0002 (JP)
(72) Inventor: KOMORI, Hideyuki, Cleantech One 637141 (SG); HATORI, Shuuhei, Tokyo 150-0002 (JP)
(74) Representative: TBK
(86) International application number: PCT/JP2023/023919
(87) International publication number: WO 2024/014289

(57) **Abstract**

Provided is a control method for an RO system that, by reducing the usage amount of chemicals and the frequency of membrane replacement, is capable of reducing power consumption (that is, CO₂) and the amount of waste and achieving stable operation, thereby contributing to energy saving and labor saving due to reduced maintenance. This control method for an RO system is a method for controlling an RO system having a plurality of RO devices 41-44 arranged in parallel, a control unit that controls start/stop processes including an operation process and a stop process of the RO devices 41-44, and a chemical injection unit that injects chemicals to alleviate fouling during the stop process. The control method performs control such that the start/stop frequency becomes higher for RO devices having a processing capability easily recovered by starting/stopping, and controls the stop time depending on the degree of recovery.

## Description

### Technical Field

The present invention relates to a control method for an RO system and a control program for a water treatment system, and particularly relates to a control method for an RO system that include a plurality of RO devices installed in parallel and a control program for a water treatment system.

### Related Art

When fouling occurs on the RO (reverse osmosis) membrane, the feed-water pressure increases, and the power consumption of the feed-water pump increases. Thus, chemical cleaning may be performed to remove fouling. However, chemical cleaning using general industrial chemicals such as acids and alkalis not only takes time and costs but also degrades the membrane and shortens its lifespan due to frequent chemical cleaning.

Chemical cleaning is effective for various types of fouling, among which alkaline chemicals target organic fouling and microbial (bio) fouling. On the other hand, physical fouling such as SS fouling due to SS (suspended solids) also occurs on RO membranes. SS fouling may also occur in combination with microbial fouling. Additionally, acids and chelating agents are effective against fouling caused by inorganic scales.

Thus, it is desirable to suppress fouling of the RO membrane with a simple configuration while minimizing the number of chemical cleanings, and to ensure the treatment efficiency of the water treatment system.

As an anti-clogging method for an RO device with an RO membrane, Patent Document 1 describes a method of blowing suspended solid concentrated effluent water that has occurred on a reverse osmosis membrane part in a process of filtering water to be treated, at regular intervals of accumulated water-passing time.

Patent Document 2 describes that, based on degrees of membrane clogging, priority of filtering devices to be caused to operate, among a plurality of filtering devices arranged in parallel, is set. It is noted that in paragraph 0064 of Patent Document 2, it is described to air-clean a membrane.

Patent Document 1: Japanese Patent Application Laid-Open (JP-A) No. 2005-279461.
Patent Document 2: Japanese Patent Application Laid-Open (JP-A) No. 2016-067968.

### SUMMARY OF INVENTION

The present invention aims to provide a control method for an RO system and a control program for a water treatment system that may reduce power consumption (i.e., CO₂) and the amount of waste by reducing the usage amount of chemicals and the number of replacements of membranes, while enabling stable operation and contributing to labor-saving through energy conservation and maintenance reduction.

A control method for an RO system according to the present invention is a control method for an RO system that includes a plurality of RO devices arranged in parallel and a control unit that controls a start/stop process including an operation process and a stop process of the RO devices. In the control method, control is performed such that a number of times of start/stop increases for RO devices that are more likely to recover treatability through start/stop operations, and a stop-time is controlled according to a recovery rate.

In one embodiment of the present invention, a chemical that mitigates fouling is injected into an RO device that has undergone the stop process, and the RO device is allowed to soak in the chemical.

In one embodiment of the present invention, a start/stop process history including a stop-time of each of the RO devices is stored, and a priority of the RO devices to be operated is decided based on the start/stop process history.

In one embodiment of the present invention, a membrane treatment performance history of each of the RO devices is stored in association with the start/stop process history of each of the RO devices, a recovery degree of the membrane treatment performance expected due to the start/stop process is estimated for each of the RO devices based on the start/stop process history and the membrane treatment performance history, and a priority of the RO devices with a larger estimated recovery degree expected due to the start/stop process and chemical immersion is decided to be higher.

In one embodiment of the present invention, an outlet pressure or power consumption of a feed-water pump that feeds water to the RO devices is measured, and a priority of the RO devices with larger outlet pressure or power consumption is decided to be higher.

In one embodiment of the present invention, a number of times of the start/stop process during operation is decided based on an estimated result of the recovery degree of the membrane treatment performance expected due to the start/stop process, and a number of times of start/stop in a predetermined time is decided so that a number-of-times-of-start/stop effect, which is an indicator of a recovery efficiency of the membrane treatment performance, becomes high.

In one embodiment of the present invention, a current membrane treatment performance of each of the RO devices are measured, and a priority of the RO devices is decided based on the current membrane treatment performance.

The program in one embodiment of the present invention is a control program for a water treatment system, which is a program for controlling a water treatment system, the water treatment system including a plurality of RO devices arranged in parallel, the program causing a computer to execute: a control instruction to control a start/stop process including an operation process and a stop process and a stop-time of the RO devices; a storage instruction to store a start/stop process history of each of the RO devices; and a priority decision instruction to decide a priority of the RO devices to be operated based on the start/stop process history.

### Effects of Invention

According to the present invention, it is possible to ensure the treatment efficiency of the RO system with a simple configuration. The present invention performs fouling removal by stopping and operating the RO membrane device, or by adjusting the flow rate of each flow path, even without performing chemical cleaning. Thus, fouling removal may be performed through software without adding any special hardware configuration, resulting in a simple structure. Further, in the case of chemical cleaning, only a very short-time chemical injection is performed during the stop-time of the RO membrane device, so the chemical usage amount may be greatly reduced compared to continuous injection or cleaning. Further, since chemicals are not added during the operation of the RO membrane device, there is no concern about leakage to the permeated water side.

It is noted that since fouling is also removed in the start/stop operations included in the operation plan, by planning the start/stop process considering the history of start/stop operations performed within the operation plan, the number of processes related to fouling removal may be suppressed compared to Patent Document 1 which intentionally performs blow process, enabling efficient fouling removal.

### BRIEF DESCRIPTION OF DRAWINGS

[FIG. 1] is a system diagram of an RO system to which a control method according to an embodiment is applied.
[FIG. 2] is a flowchart showing a flow of determination based on functional blocks.
[FIG. 3] is a flowchart showing a flow of determination based on functional blocks.
[FIG. 4] is a flowchart showing a flow of determination based on functional blocks.
[FIG. 5] is a graph showing the differential pressure change of an RO element according to Experimental Example 1 and Comparative Example 1.
[FIG. 6] is a graph showing the differential pressure change of an RO element according to Experimental Example 2 and Comparative Example 2.

### DESCRIPTION OF EMBODIMENTS

An embodiment is described below with reference to drawings.

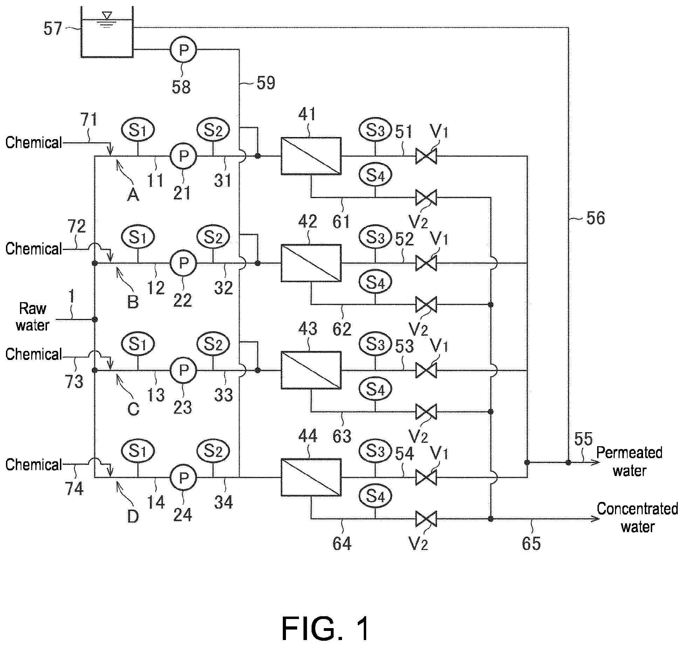

FIG. 1 is a system diagram of an RO system to which a control method according to an embodiment is applied.

Raw water is supplied from a raw water pipe 1 to a plurality of (in this embodiment, four) treatment systems (which may be hereinafter referred to as systems) A, B, C, and D and is RO-treated.

In the systems A to D, raw water is conveyed through pipes 11 to 14 connected to the raw water pipe 1, pressurized by pumps 21 to 24, and then supplied (fed) to cross-flow type RO devices 41 to 44 through pipes 31 to 34.

The permeated water that has permeated through the RO membranes of the RO devices 41 to 44 is taken out as permeated water from permeated water pipes 51 to 54 via a collective permeated water pipe 55. It is noted that a part of the permeated water is conveyed via a pipe 56 branched from the pipe 55 to the cleaning water tank 57 and stored. The water in the cleaning water tank 57 may be supplied to the feed-water pipe pipes 31 to 34 via a cleaning line 59 provided with a cleaning pump 58.

The concentrated water (brine) of the RO devices 41 to 44 is taken out as concentrated water from concentrated water pipes 61 to 64 via a collective concentrated water pipe 65.

Sensors S1 and S2 are provided in each of the pipes 11 to 14 and 31 to 34 to measure flow rate, pressure, pH and the like. Sensors S3 and S4 are provided in the pipes 51 to 54 and 61 to 64 to measure one or two or more characteristics such as flow rate, pressure, and electrical conductivity. Valves V1 and V2 are provided in the pipes 51 to 54 and 61 to 64.

Further, chemical injection units 71 to 74 for injecting chemicals are connected to the pipes 11 to 14, respectively. For example, the chemical injection points are upstream of the pumps 21 to 24. The chemicals injected by the chemical injection units 71 to 74 are those that mitigate fouling, for example, RO cleaning chemicals or slime control agents.

The detection data from each of the sensors is input to a control device (not shown). The control device stores operation plan data in a memory together with a control program. According to the signal from the control device, each of the pumps 21 to 24, and 58, each of the valves V1 and V2, and the chemical injection pumps (not shown) of the chemical injection units 71 to 74 are controlled.

In this embodiment, in the cross-flow type RO device, in addition to chemical cleaning, "start/stop process", which involves short-term stop and restart of the RO device, is performed for the purpose of physical removal of fouling. It is noted that the stop-time in this start/stop process may be arbitrarily changed.

The effects of the start/stop process in physically detaching fouling include "release of consolidation of membrane contaminants by stop of the device and flushing at the time of starting the device (the release of membrane surface consolidation is more likely to be promoted due to the large change in effective pressure on the membrane surface when transitioning from stop to start)" and "suck-back (backwashing due to osmotic pressure generated at the time of stop)". In addition, start/stop process is excellent in that it may remove physical fouling without stopping the water treatment and without using chemicals, as it occurs secondarily in the normal water treatment (for example, changing the number of operating units according to fluctuations in permeated water flow rate).

The decision to execute start/stop process is made based on whether "the recovery effect of membrane performance by start/stop process (for example, the amount of reduction in power consumption)" is 0 or more, or exceeds "the cost incurred by start/stop process (for example, the amount of increase in power consumption associated with the flushing process and pump startup)". When this is satisfied, it is good to repeat the start/stop process as long as no abnormality in desalting rate is detected.

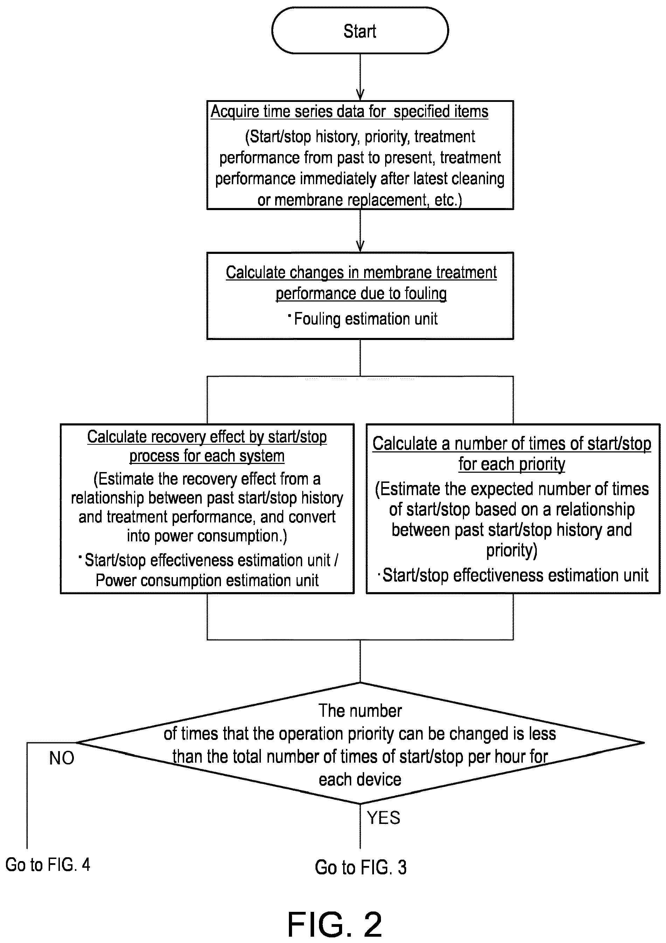

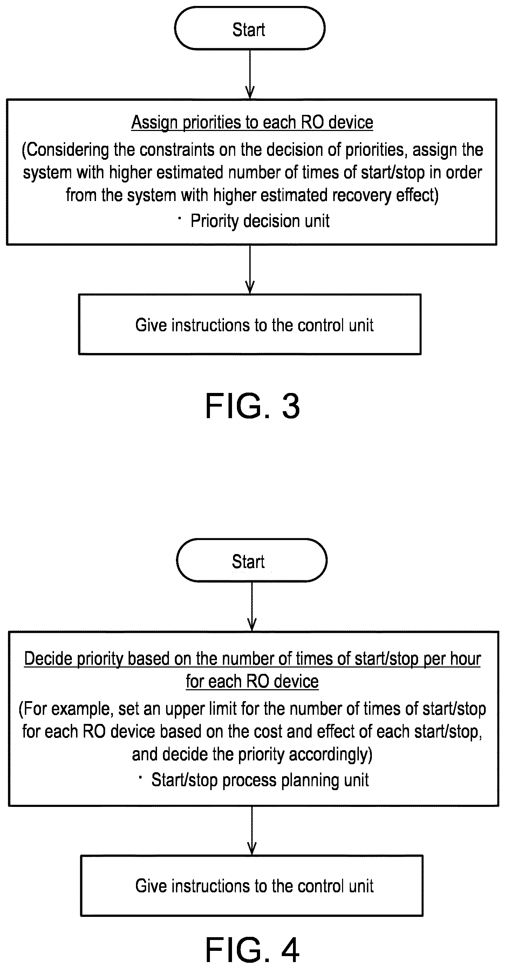

Specifically, as shown in FIG. 2 to FIG. 4, based on the relationship between the past start/stop history and the membrane treatment performance history of the RO device to be used, "the membrane treatment performance expected to be recovered by start/stop process" is calculated from the change from "the membrane treatment performance immediately after the recent cleaning or membrane replacement" to "the current membrane treatment performance", and then, the "number of times of start/stop per specified time" with high effectiveness is decided from the "recovery effect for each number of times of start/stop per specified time (for example, within the past 24 hours)", and the "recovery effect of membrane performance by start/stop process (for example, feed-water pressure, power consumption)" at that time is calculated.

As the recovery effect gradually decreases when repeatedly performing start/stop operations on a certain RO device, the recovery effect of each device is calculated periodically (for example, every 3 hours), and operation priority is allocated so that as large a number of times of start/stop as possible is assigned to a system with a high recovery effect.

Further, since physical fouling has a property of being more consolidated as time of sedimentation on the membrane surface is prolonged, "the recovery effect of membrane performance by start/stop process" gradually decreases. Since the power consumption of the membrane device increases only for the time operated while leaving "the membrane treatment performance expected to be recovered by start/stop process", detection and execution of start/stop process at an early stage lead to a significant reduction in power consumption and the number of cleanings per permeated water volume.

Start/stop and chemical treatment also have improvement effects on fouling that is undetectable, thus, in machine learning, it becomes possible to optimize the number of times of start/stop.

In this embodiment, in a system where a plurality of RO devices are installed in parallel as described above, the priority for operation is decided. In particular, the operation priority of the RO devices is decided based on the history of start/stop operations performed in the operation plan.

In the case where an upper limit is set for the number of changes in operation priority and the "number of times of start/stop per specified time" for each of the RO devices not capable of being satisfied (for example, an operation of an operator giving an instruction for operation priority assignment twice a day is determined), the operation priority is allocated so that as large a number of times of start/stop as possible is assigned to a system with a high recovery effect.

In the case where the "number of times of start/stop per specified time" for each of the RO devices is satisfied, "the membrane treatment performance capable of being recovered by start/stop process" is detected at an early stage, and the operation priority is allocated such that the start/stop process is executed at an early stage.

The time for stopping the operation of the RO device by the start/stop process is, for example, 5 minutes or more, and it is preferable to decide it based on the recovery rate of the membrane treatment performance. By taking a certain stop-time, the recovery effect of membrane treatment performance due to differential pressure improves. It is noted that if the stop-time is less than 5 minutes, the recovery effect of the membrane treatment performance of the RO device may not be sufficient.

Here, whether the membrane treatment performance has sufficiently recovered or not is determined based on whether "the energy (power consumption, feed-water pressure) required per permeated water volume after start/stop" is lower than "the energy (power consumption, feed-water pressure) required per permeated water volume before start/stop".

When there is "membrane treatment performance not capable of being removed by the start/stop process" in change from "the membrane treatment performance immediately after the latest cleaning or membrane replacement" to "current membrane treatment performance", it is addressed by implementing other cleaning methods (for example, chemical cleaning, flushing using chemicals or treated water, or a method of chemical immersion at the time of stop).

In the case of performing chemical immersion at the time of stop of the RO device in the start/stop process, the chemical concentration is arbitrary, but it is controlled in a range of 10 mg/L or more and below a concentration that does not cause chemical deterioration to the membrane. The stop-time and chemical concentration may be decided based on the outlet pressure and/or the power consumption of the feed-water pumps 21 to 24 corresponding to the RO devices 41 to 44 to be stopped. The recovery degree of the membrane treatment performance of the RO device may be calculated from the membrane treatment performance history, and the stop-time and chemical concentration may be decided. Further, when there is no "membrane treatment performance not capable of being removed by the start/stop process", it is possible to automatically select not to add chemicals.

The chemical injection may be performed for an extremely short time, and the amount of chemicals used may be greatly reduced compared to continuous injection or chemical cleaning. Further, since the chemical injection is performed at the time of stop of the RO device, there is no concern about leakage to the permeated water side.

By executing the plan for start/stop process considering the start/stop process history performed within the operation plan, the number of treatments related to fouling removal may be reduced and fouling may be efficiently removed compared to Patent Document 1 which intentionally performs blow process.

This RO system has an operation plan determined according to the amount of water to be produced, etc., and the operation plan includes information on the number of RO devices to be operated at each point in time. While the RO device is stopped during the start/stop process, the operation rate of RO devices in other systems is controlled so that the permeated water volume becomes as planned.

It is noted that the above-mentioned control system includes the following functional units.

### <Control unit>

The control unit controls operation and stop of a filtration device by controlling a valve, a pump and the like.

The start/stop process includes actions of closing the flow path on the permeated water side and reducing the flow rate of raw water.

### <Measurement unit for measuring feed-water information>

For example, pH, raw water pressure, raw water flow rate and the like are measured.

### <Measurement unit for measuring membrane treatment performance>

For example, feed-water pressure, permeated water pressure, brine pressure, feed-water pipe flow rate, permeated water flow rate, brine flow rate, water temperature, feed-water conductivity, treated water conductivity and the like are measured.

### <Acquisition unit for acquiring pump status>

For example, frequency, output current, output voltage, power consumption, and outlet pressure are acquired.

### <Recording unit for recording device information>

For example, membrane area, the number of vessels, membrane configuration and the like are recorded.

### <Storage unit for storing maintenance history>

The membrane treatment performance (for example, feed-water pressure, inter-membrane differential pressure, and a flux) immediately after the latest cleaning or membrane replacement is stored.

### <Storage unit for storing start/stop history>

Both of history of performing start/stop according to the operation plan of water treatment and history of intentionally performing the start/stop process for SS removal are stored. The stop-time during the start/stop process is also stored.

### <Storage unit for recording priority history>

A history of priority instructed by the control unit is stored.

### <Calculation unit for calculating membrane treatment performance>

For example, the inter-membrane differential pressure and FLUX are calculated.

### <Power consumption estimation unit>

In the case where power consumption is not continuously measured, the power consumption is estimated from measured values (for example, feed-water pressure and feed-water pipe flow rate).

### <Fouling estimation unit>

An amount of change in membrane treatment performance due to fouling is calculated by excluding, from the treatment performance immediately after the latest cleaning or membrane replacement, the influence of operating conditions (for example, inlet water pressure, treated water flow rate, temperature) in a difference corresponding to reduction in the treatment performance due to influence of operation having been continued.

Properties of fouling are classified. For example, by calculating the membrane treatment performance expected to be recovered by the start/stop process in the amount of change in membrane treatment performance due to fouling, the membrane treatment performance not capable of being removed by the start/stop process is detected.

### <Start/stop effectiveness estimation unit>

For each RO device, the recovery effect of membrane treatment performance expected due to the start/stop process, that is, start/stop effectiveness is estimated. This is because whether start/stop is effective for recovery of membrane treatment performance or not differs depending on RO devices.

The start/stop effectiveness for each of the RO devices is estimated from a relationship between its past start/stop history and membrane treatment performance history (for example, within one year). For example, by referring to the number of starts/stops performed within a predetermined period and changes in membrane treatment performance before and after the starts/stops, a recovery degree of treatment performance by the starts/stops is calculated.

### <Start/stop process planning unit>

Timings of the start/stop process in the future are planned based on the start/stop history. An RO device that has not started/stopped within a predetermined period is caused to start/stop.

The number of times of start/stop is decided based on an estimated result of the start/stop effectiveness estimation unit. The number of times of start/stop is decided so that a number-of-times-of-start/stop effect to be an indicator of recovery efficiency is high (for example, when there is no difference between five times of start/stop and four times of start/stop within 24 hours, four times is selected).

### <Priority decision unit>

Priority of RO devices to be caused to perform the start/stop process is decided based on the start/stop history of each of the RO devices.

An RO device with a higher start/stop effectiveness is prioritized higher.

Furthermore, an RO device in which the outlet pressure or power consumption of the high pressure pump (feed-water pump) acquired by the pump state acquisition unit is larger is prioritized higher. Further, RO devices with a large expected recovery degree of membrane treatment performance due to chemical immersion process is prioritized higher.

### <Chemical injection control unit>

A chemical injection unit is provided at the inlet of each of the RO devices (for example, before the feed-water pump) installed in parallel, and based on the control by the chemical injection control unit, chemicals are injected before stopping the RO device. This chemical concentration may be set high to the extent that it does not damage the membrane. Since when using a pump with high discharge pressure similar to a feed-water pump for the chemical injection pump, the flow rate becomes excessive, making it difficult to maintain a high chemical concentration, it is preferable to use a pump with low discharge pressure similar to a raw water pump and increase the chemical concentration in a constant flow rate state.

Further, the chemical injection control unit estimates the expected recovery degree of membrane treatment performance by chemical immersion for each of the RO devices.

### <Experimental example>

The change in differential pressure (delta Pressure/MPa) of the first RO element, which is prone to biofouling, was measured in an RO device for seawater desalination equipped with a 4-inch module.

### Experimental example 1

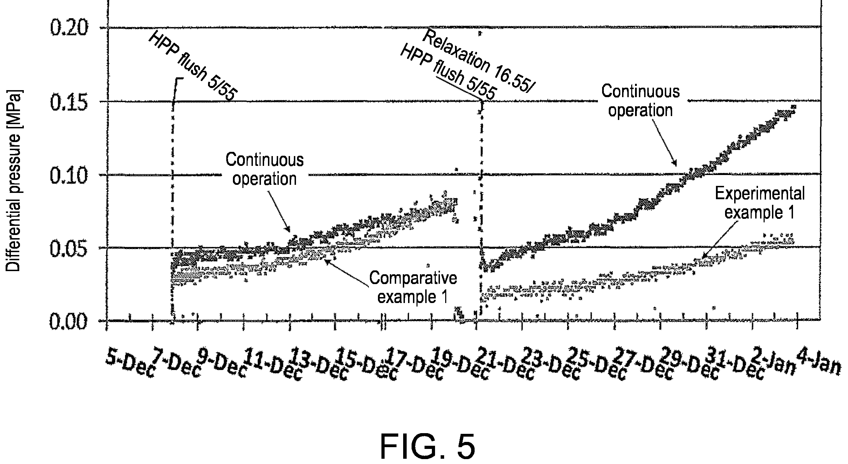

Between December 21 and January 4, as shown in FIG. 5, the operation was conducted under start/stop conditions with a stop-time of 16.65 minutes, a flushing process of 5 minutes, followed by continuous operation for 55 minutes. It was confirmed that the increasing trend of the differential pressure was smaller and more stable operation was achieved compared to continuous operation without start/stop process.

### Comparative Example 1

Between December 7 and December 19, as shown in FIG. 5, the operation was conducted under start/stop conditions with a stop-time of 5 minutes, followed by continuous operation for 55 minutes. It was confirmed that there was almost no difference compared to continuous operation without start/stop process.

### Experimental example 2

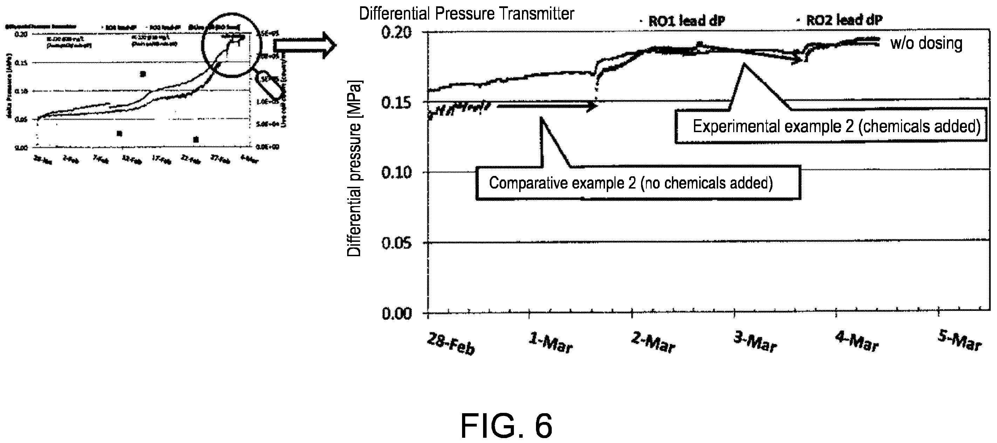

Next, under raw water conditions more prone to biofouling, after the differential pressure increased, the change in differential pressure was measured in the case where 100 mg/L of slime control agent (Kurita IK-220, Kurita Water Industries Ltd.) was added and the operation was stopped for 24 hours. The measurement results are shown in FIG. 6.

### Comparative Example 2

After the differential pressure increased, the change in differential pressure was measured in the case where the operation was stopped for 24 hours without adding any chemicals. The measurement results are shown in FIG. 6.

As shown in FIG. 6, it was confirmed that the differential pressure decreased in the case where chemicals were added, and there was no change in differential pressure in the case where chemicals were not added. It is noted that the optimal value of chemical concentration differs depending on the state of biofouling.

Although the present invention has been described in detail with reference to a particular embodiment, it is apparent to a person skilled in the art that various modifications can be made therein without departing from the spirit and scope of the present invention.

The present application is based on Japanese Patent Application No. 2022-111256 filed on July 11, 2022, which is incorporated herein by reference in its entirety.

### Reference Signs List

21~24 Pump
41~44 RO device
57 Cleaning tank
71~74 Chemical injection unit

## Claims

1. A control method for an RO system, the RO system comprising a plurality of RO devices arranged in parallel and a control unit that controls a start/stop process including an operation process and a stop process of the RO devices, wherein
control is performed such that a number of times of start/stop increases for RO devices that are more likely to recover treatability through start/stop operations, and a stop-time is controlled according to a recovery rate.

2. The control method for the RO system according to claim 1, wherein a chemical that mitigates fouling is injected into an RO device that has undergone the stop process, and the RO device is allowed to soak in the chemical.

3. The control method for the RO system according to claim 2, wherein a start/stop process history including a stop-time of each of the RO devices is stored, and
a priority of the RO devices to be operated is decided based on the start/stop process history.

4. The control method for the RO system according to claim 3, wherein a membrane treatment performance history of each of the RO devices is stored in association with the start/stop process history of each of the RO devices,
a recovery degree of the membrane treatment performance expected due to the start/stop process is estimated for each of the RO devices based on the start/stop process history and the membrane treatment performance history, and
a priority of the RO devices with a larger estimated recovery degree expected due to the start/stop process and chemical immersion is decided to be higher.

5. The control method for the RO system according to claim 4, wherein an outlet pressure or power consumption of a feed-water pump that feeds water to the RO devices is measured, and
a priority of the RO devices with larger outlet pressure or power consumption is decided to be higher.

6. The control method for the RO system according to claim 5, wherein a number of times of the start/stop process during operation is decided based on an estimated result of the recovery degree of the membrane treatment performance expected due to the start/stop process, and
a number of times of start/stop in a predetermined time is decided so that a number-of-times-of-start/stop effect, which is an indicator of a recovery efficiency of the membrane treatment performance, becomes high.

7. The control method for the RO system according to any one of claims 1 to 6, wherein a current membrane treatment performance of each of the RO devices are measured, and
a priority of the RO devices is decided based on the current membrane treatment performance.

8. A control program for a water treatment system, which is a program for controlling a water treatment system, the water treatment system comprising a plurality of RO devices arranged in parallel, the program causing a computer to execute:
a control instruction to control a start/stop process including an operation process and a stop process and a stop-time of the RO devices;
a storage instruction to store a start/stop process history of each of the RO devices; and
a priority decision instruction to decide a priority of the RO devices to be operated based on the start/stop process history.
